Europäisches Patentamt

European Patent Office

Office européen des brevets

(11) Veröffentlichungsnummer: **0 393 505**
**A2**

## (12) EUROPÄISCHE PATENTANMELDUNG

(21) Anmeldenummer: **90107001.1**

(22) Anmeldetag: **11.04.90**

(51) Int. Cl.⁵: **G01M 17/00**

(30) Priorität: **21.04.89 DE 3913070**

(43) Veröffentlichungstag der Anmeldung:
**24.10.90 Patentblatt 90/43**

(84) Benannte Vertragsstaaten:
**AT BE DE FR GB IT NL SE**

(71) Anmelder: **Asea Brown Boveri**
**Aktiengesellschaft**
**Kallstadter Strasse 1**
**D-6800 Mannheim 31(DE)**

(72) Erfinder: **Pana, Constantin**
**Am Brunnengarten 6**
**D-6800 Mannheim 1(DE)**
Erfinder: **Weyland, Hans-Walter**
**Neugasse 24**
**D-6701 Kallstadt(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Prüfstand für Kettenfahrzeuge.**

(57) Ein Prüstand für Kettenfahrzeuge besteht aus einer in dem Fundament (2) des Prüfstandes angeordneten Grube (8), in der zwei Laufbänder (3) angeordnet sind. Das zu prüfende Kettenfahrzeug (1) wird auf die Laufbänder (3) gefahren und über seine angetriebene Achse (5) mit den Prüfstandsaggregaten (6) verbunden. Beim Testvorgang laufen die Ketten auf den Laufbändern (3) leer mit. Schwingungen der Kette, die vom Fahrzeuguntergrund herrühren, können so erfaßt werden.

Fig. 1

EP 0 393 505 A2

## Prüstand für Kettenfahrzeuge

Die Erfindung bezieht sich auf einen Prüstand für Kettenfahrzeuge, bei dem das Prüffahrzeug über seine angetriebenen Achsen mit Prüfstandsaggregaten verbunden ist.

Ein Fahrzeugprüfstand dient als Ersatz für Teststrecken, da hier aufgrund von äußeren Einflüssen nicht die volle Fahrzeugleistung erbracht werden kann und spezielle Fahrsituationen nicht beliebig wiederholbar sind. Durch programmgesteuerte Prüfstände mit einer elektronischen Regelungs- und Simulationsanlage wird eine wirklichkeitsgetreue, dynamische Belastung nachgebildet, die praktisch allen Fahrbedingungen gerecht wird und mit der sich sämtliche Fahrsituation exakt und jederzeit wiederholbar simulieren lassen. Da Teststrecken sehr kostspielig durch Geländeerwerb, Unterhalt und Umweltbelastung sind, haben sich Prüfstände immer mehr durchgesetzt.

Bekannte Prüfstände für Fahrzeuge bestehen aus einem allseits geschlossenen Prüffeld, in das das Prüffahrzeug eingeschoben wird oder selbsttätig einfährt. Über Kar danwellen und Anpaßgetriebe werden die angetriebenen Kettenräder/Radnaben des Prüffahrzeugs mit Antrieben, vorwiegend Gleichstrommaschinen verbunden, die sowohl antreibend als auch bremsend wirken können. Mit diesen elektrischen Maschinen können in der Praxis vorkommende Fahrsituationen simuliert werden. Die Anzahl der elektrischen Maschinen und damit die Anzahl der· angetriebenen Kettenräder oder Radnaben ist beliebig und kann jederzeit erweitert werden. Anpaßgetriebe sind vorgesehen, um die Antriebs- und Bremsmomente zwischen elektrischen Maschinen und Prüffahrzeug zu koordinieren, so daß auf einem Prüstand sowohl Personenkraftwagen, Lastkraftwagen und schienengebundene Fahrzeuge als auch Kettenfahrzeuge mit abgenommener Kette geprüft werden konnen.

Während bei Prüfständen für Kraftfahrzeuge vor dem eigentlichen Prüfvorgang die Räder entfernt werden, müssen bei Panzern die Ketten abmontiert werden. Da aber die Ketten bei Panzern eine wesentliche Wirkung auf die gesamten Fahreigenschaften ausüben, entspricht eine Prüfung ohne Ketten nicht den echten Praxisbedingungen.

Es ist deshalb Aufgabe der Erfindung, einen Prüstand für Kettenfahrzeuge zu schaffen, bei dem der Prüfvorgang mit aufgelegten Ketten durchgeführt werden kann.

Erfindungsgemäß wird dies durch die Merkmale des Patentanspruchs 1 erzielt. Zweckmäßige Ausgestaltungen sind aus den Unteransprüchen ersichtlich.

Vorteilhaft bei dem erfindungsgemäßen Prüstand ist die genaue Simulation des Fahrverhaltens von Kettenfahrzeugen bei allen nur möglichen Bedingungen. Da eine Demon tage der Ketten nicht mehr erforderlich ist, und die Ketten eine wesentliche Rolle beim Fahrverhalten von Panzern spielen, kann mit dem neuen Prüstand eine bisher nicht gekannte Genauigkeit erreicht werden. Momentänderungen und unterschiedliche Straßenverhältnisse können mit hoher Präzision erfaßt, verstellt und ausgewertet werden.

Dabei erfolgt die eigentliche Prüfung sehr schnell, weil keine umfangreichen Vorbereitungsarbeiten mehr erforderlich sind. Ein Hochbocken, Kettendemontage und Justierung des Prüflings auf einem gesonderten Vorbereitungsfeld entfällt vollkommen, denn das Prüffahrzeug fährt mit eigener Kraft bis auf das Prüffeld. Es ist einleuchtend, daß bei besseren Fahrbetriebssimulationsmöglichkeiten noch zusätzlich erhebliche Einsparungen der teuren Prüfstandskosten erzielbar sind. Vorteilhaft ist weiter, daß mit dem erfindungsgemäßen Prüstand die Lenkmomente bei Kettenfahrzeugen aufgenommen werden können und ein Geradeauslauf unter allen Lastbedingungen gegeben ist.

Weitere Vorteile sind aus der nachfolgenden Beschreibung ersichtlich.

Ein Ausführungsbeispiel der Erfindung wird nachstehend anhand der schematischen Zeichnung näher erläutert.

Es zeigen..

Fig. 1 einen Panzer in einem Fahrzeugprüfstand in Seitenansicht, wobei die Panzerkette ein Laufband antreibt und

Fig. 2 einen Prüstand für Kettenfahrzeuge in Draufsicht mit den beiden Laufbändern und zwei Prüfstandaggregaten für zwei angetriebene Achsen.

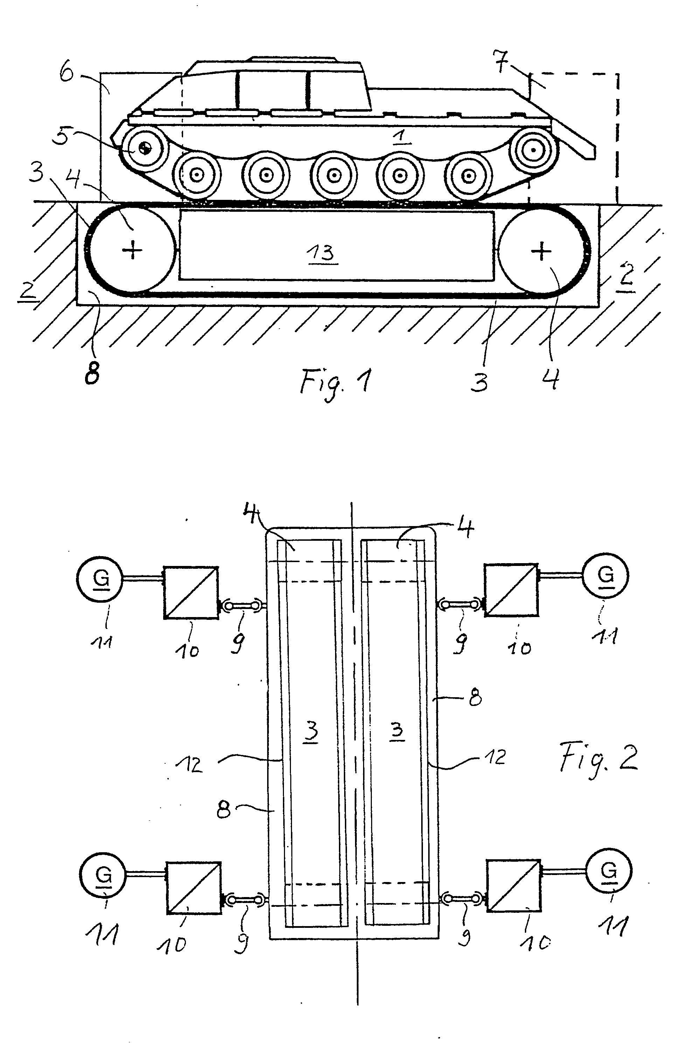

Nach Fig. 1 ist ein Prüffahrzeug, im vorliegenden Fall ein Panzer 1, mit eigener Kraft in einen Prüstand eingefahren. Im Fundament 2 des Prüfstandes sind in einer Grube 8 zwei Laufbänder 3 installiert, die über Trommeln 4 umlaufen. Der obere Teil des über die Trommeln 4 umlaufenden Laufbandes 3 schließt mit dem Boden des Prüfstandes ab. In der Grube 8, zwischen den beiden Trommeln 4 des Laufbandes 3, ist weiterhin ein Bandunterstützungssystem 13 angeordnet. Hierdurch ist gewährleistet, daß das Laufband 3 immer den erforderlichen Gegendruck zu der Kette des Prüffahrzeugs 1 aufweist. In vorteilhafter Weise lassen sich durch dieses Bandunterstützungssystem 13 aber auch Straßenunebenheiten oder gar Höker im Gelände nachbilden, etwa dadurch, daß Ansätze, Stempel oder dergleichen aus dem System 13 in Richtung auf das obere Trum des Bandes ausgefahren werden und dieses lokal begrenzt nach oben drücken.

Der Panzer 1 ist mit seiner angetriebenen Achse 5 über Kardanwellen 9 beidseitig an je ein Prüfstandsaggregat 6 angeschlossen. Weitere Prüfstandsaggregate 7 können vorgesehen sein, um auch Fahrzeuge mit mehr als einer angetriebenen Achse testen zu können.

Fig. 2 zeigt die Draufsicht auf den erfindungsgemäßen Prüstand für Kettenfahrzeuge. Die beiden Laufbänder 3, die in ihrem Abstand zueinander verstellbar und damit an individuelle Fahrzeugspurweiten anpaßbar sind, befinden sich in der Grube 8. Die Laufbänder 3 werden über Trommeln 4 umgelenkt. Um die Laufbänder 3 ist eine Führung 12 angeordnet, damit die Laufbänder bei Bewegungen des Prüffahrzeugs 1 nicht auswandern. Die angetriebenen Achsen des Prüffahrzeugs sind, wie erwähnt, an die

Prüfstandsaggregate 6,7 angeschlossen. Dies erfolgt über Kardanwellen 9. Ausgleichsgetriebe 10 und elektrische Maschine 11 bilden Teile der Prüfstandsaggregate 6,7.

Der in den Prüstand eingefahrene Panzer steht also auf einem Laufbandsystem und wird mit seinen Antriebsachsen an die Prüfstandaggregate angekuppelt. Beim Testvorgang treibt die Kette des Panzers das Laufband leer an. Zur Erzeugung von Schwingungen, die auf die Straße oder den Untergrund einwirken, laufen also auch die Panzerketten mit.

Dabei wird durch die Prüfstandsaggregate 6,7 bzw. Kardanwelle 9, Ausgleichsgetriebe 10 und elektrische Maschine 11 nach Fig. 2 eine wirklichkeitsgetreue dynamische Last nachgebildet, die allen Fahrbedingungen gerecht wird.

Erstmalig lassen sich so durch den erfindungsgemäßen Prüstand auch bei Kettenfahrzeugen die Problematik der Lenkung nachvollziehen, indem eine Kette läuft und die andere abgebremst wird.

Die Kette, die bei Kettenfahrzeugen das empfindlichste Teil ist und zu den häufigsten Ausfallursachen zählt, kann jetzt ebenso wie die Laufrollenfederung in vorbildlicher Weise praxisgerecht überprüft werden und mit zusatzlichen Vibrationen, wie beispielsweise mit durchlaufenden Höckern durch das Bandunterstützungssystem 13, beaufschlagt werden.

Zur Nachbildung weiterer praxisbezogener Einflüsse ist es auch möglich, die Gurttrommeln bzw. die Rollen 4 der Laufbänder 3 mit eigenen elektrischen Maschinen anzutreiben.

**Ansprüche**

1. Prüstand für Kettenfahrzeuge, bei dem das Prüffahrzeug über seine angetriebenen Achsen mit Prüfstandsaggregaten verbunden sind, dadurch gekennzeichnet, daß für jede Kette des Prüffahrzeugs ein Laufband (3) vorgesehen ist, das von der jeweiligen Kette antreibbar ist.

2. Prüstand nach Anspruch 1, dadurch gekennzeichnet, daß die Laufbänder (3) im Boden des Prüfstands versenkt angeordnet sind und im wesentlichen bündig mit diesem abschließen.

3. Prüstand nach Anspruch 1, dadurch gekennzeichnet, daß die Laufbänder (3) über eine oder mehrere gesondert vorgesehene Vorrichtungen antreibbar sind.

4. Prüstand nach Anspruch 1, dadurch gekennzeichnet, daß durch ein Bandunterstützungssystem (13) unter dem Prüffahrzeug (1) durchlaufende Höcker zur Nachbildung von Geländeunebenheiten nachbildbar sind.

5. Prüstand nach Anspruch 1 oder 2, dadurch gekennzeichnet, daß die Laufbänder (3) in ihrem Abstand zueinander verstellbar sind.

Fig. 1

Fig. 2